# EUROPEAN PATENT SPECIFICATION

(11) **EP 2 671 687 B1**
(45) Date of publication and mention of the grant of the patent: **30.03.2022**
(21) Application number: 13155941.1
(22) Date of filing: 20.02.2013
(51) Int. Cl.: B25J 9/00

(54) **Robot cell and assembling method of robot cell**
Roboterzelle und Montageverfahren der Roboterzelle
Cellule de robot et procédé d'assemblage de cellule de robot

(30) Priority: 08.06.2012 JP 2012131305; 08.08.2012 JP 2012175763
(43) Date of publication of application: 11.12.2013
(73) Proprietor: Kabushiki Kaisha Yaskawa Denki, Kitakyushu-shi, Fukuoka 806-0004 (JP)
(72) Inventor: Umeno, Makoto, Kitakyushu-shi, Fukuoka 806-0004 (JP); Suyama, Takashi, Kitakyushu-shi, Fukuoka 806-0004 (JP); Yoshida, Osamu, Kitakyushu-shi, Fukuoka 806-0004 (JP)
(74) Representative: Grünecker Patent- und Rechtsanwälte PartG mbB

(56) References cited:
- EP-A1- 2 433 761
- EP-A1- 2 436 603
- JP-A- 2002 346 852
- US-A1- 2009 249 606
- None

## Description

### FIELD

The embodiments discussed herein are directed to a robot cell and to an assembling method of a robot cell.

### BACKGROUND

Japanese Patent Application Laid-open 2011-240443 discloses a robot cell that includes a robot that performs a work by performing a predetermined operation and working units, such as equipment used in a work by a robot, arranged around the robot.

In the robot cell, typically, the arrangement positions of the working units arranged around the robot are taught to the robot in advance. This allows the robot to perform a work using the working units arranged around the robot.

However, in the robot cell, there is a problem that in order to teach the arrangement positions of the working units arranged around the robot to the robot, it is necessary to perform a work of accurately measuring the arrangement positions of the working units with respect to the arrangement position of the robot and this work is troublesome. The prior art documents US 2009/0249606 A1 and EP 2 433 603 A1 disclose robot cells including a first surface part on which a robot is arranged, and a second surface part in which a plurality of fixing portions that are used to fix a working unit used by the robot are arranged at a predetermined position, wherein the working unit is fixed to the second surface part by using a fixing portion selected from the fixing portions.

An aspect of the embodiments is achieved in view of the above and an object of an aspect of the embodiments is to provide a robot cell and an assembling method of a robot cell capable of teaching an accurate arrangement position of a working unit arranged around the robot to the robot without performing a troublesome work.

### SUMMARY

According to the present invention, there is provided a robot cell as defined in appended claim 1 and an assembling method of a robot cell as defined in appended claim 11.

According to an aspect of the embodiments, it is possible to provide a robot cell and an assembling method of a robot cell capable of teaching an accurate arrangement position of a working unit arranged around the robot to the robot without performing a troublesome work.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
FIG. 1A is an explanatory diagram illustrating a robot cell according to a first embodiment in plan view;
FIG. 1B is an explanatory diagram illustrating the robot cell according to the first embodiment in front view;
FIG. 1C is an explanatory diagram schematically illustrating a display content of a simulator according to the first embodiment;
FIG. 2A and FIG. 2B are explanatory diagrams illustrating a part of a robot to which a displacement correction function is added according to the first embodiment;
FIG. 3A is an explanatory diagram illustrating a jig according to the first embodiment in plan view;
FIG. 3B is an explanatory diagram illustrating the jig according to the first embodiment in side view;
FIG. 4A is an explanatory diagram illustrating an arrangement process of working units using the jig according to the first embodiment in plan view;
FIG. 4B is an explanatory diagram illustrating the arrangement process of the working units using the jig according to the first embodiment in side view;
FIG. 5A is an explanatory diagram illustrating the arrangement process of the working units using the jig according to the first embodiment in plan view;
FIG. 5B is an explanatory diagram illustrating the arrangement process of the working units using the jig according to the first embodiment in side view;
FIG. 6 is an explanatory diagram illustrating an extending method of the arrangement area of a working unit in a second surface part according to the first embodiment;
FIG. 7 is an explanatory diagram illustrating a first surface part and a second surface part, which are integrally formed, according to the first embodiment;
FIG. 8 is an explanatory diagram illustrating a robot cell according to a second embodiment in front view;
FIG. 9 is an explanatory diagram illustrating a first surface part and a second surface part, which are integrally formed, according to the second embodiment;
FIG. 10A and FIG. 10B are explanatory diagrams illustrating a robot system according to a third embodiment;
FIG. 11 is an explanatory diagram of the inside of a draft chamber according to the third embodiment in top view;
FIG. 12 is an explanatory diagram illustrating an operation effect of a work table according to the third embodiment;
FIG. 13 is an explanatory diagram illustrating a tabletop having a plurality of through holes according to the third embodiment in top view;
FIG. 14 is an explanatory diagram illustrating an operation effect of the tabletop having the through holes according to the third embodiment;
FIG. 15 is an explanatory diagram illustrating equipment arranged on the tabletop according to the third embodiment;
FIG. 16 is an explanatory diagram when equipment is arranged on the tabletop according to the third embodiment;
FIG. 17 is a perspective explanatory diagram illustrating a work table according to a modification of the third embodiment;
FIG. 18A is an explanatory diagram illustrating a robot system according to a fourth embodiment; and
FIG. 18B is an explanatory diagram illustrating a robot system according to a fifth embodiment.

### DESCRIPTION OF EMBODIMENTS

Hereinafter, embodiments of a robot cell and an assembling method of a robot cell disclosed in the present application will be explained in detail with reference to the accompanying drawings. This invention is not limited to the following embodiments.

Moreover, in the embodiments described below, an explanation is given here of a robot cell that demonstrates pizza-making by a robot performing a predetermined operation and serves a cooked pizza to a customer as an example. The work performed by the robot according to the present embodiments may be any work and is not limited to cooking.

### (First Embodiment)

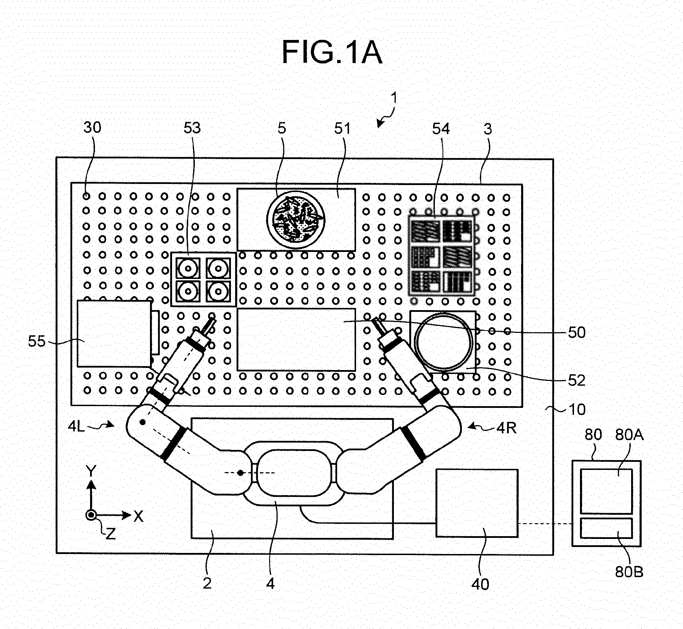

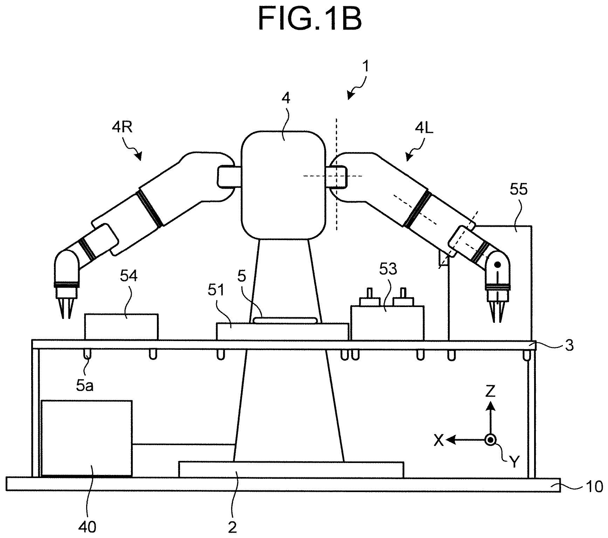

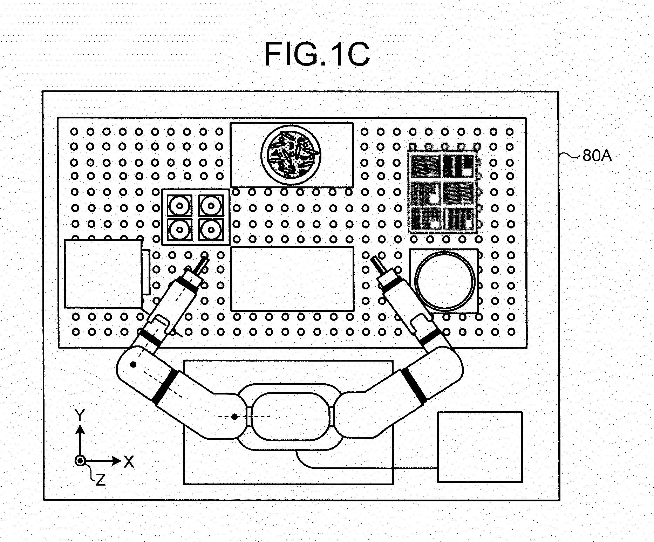

FIG. 1A is an explanatory diagram illustrating a robot cell 1 according to the first embodiment in plan view and FIG. 1B is an explanatory diagram illustrating the robot cell 1 according to the first embodiment in front view. Moreover, FIG. 1C is an explanatory diagram schematically illustrating a display content of a simulator 80 according to the first embodiment. In the following explanation, the X axis and the Y axis, which are substantially orthogonal to each other, are defined on a floor (substantially horizontal surface) 10 of the robot cell 1 and the Z axis is defined in a direction normal to the floor 10.

As illustrated in FIG. 1A and FIG. 1B, the robot cell 1 according to the present embodiment includes a first surface part 2 on which a robot 4 that performs a work by performing a predetermined operation is arranged. Furthermore, the robot cell 1 includes a second surface part 3 in which a plurality of fixing portions used for fixing working units used in a work by the robot 4 is provided at predetermined positions and to which working units are fixed by using fixing portions selected from the fixing portions

Specifically, the first surface part 2 is a plate that is arranged at a predetermined position on the floor 10 of the robot cell 1 such that the top surface thereof is substantially parallel to the floor 10 (X-Y plane). The robot 4 is arranged and fixed to the top surface of the first surface part 2.

The robot 4 is called a dual-arm robot that includes two robot arms, i.e., a left arm 4L and a right arm 4R that extend right and left from the trunk provided on the leg portion. The left arm 4L is a robot arm capable of operating each joint with seven axes indicated by the dotted lines and black dots in FIG. 1A and FIG. 1B as the rotation axes.

Moreover, the right arm 4R is also a robot arm capable of operating each joint with seven axes as the rotation axes in a similar manner. A robot hand that is an end effector capable of gripping a workpiece is provided at the tip of each of the left arm 4L and the right arm 4R.

The robot 4 is connected to a robot controller 40 provided in the robot cell 1 and performs a predetermined work in accordance with the control by the robot controller 40. Moreover, the robot controller 40 is connected to the simulator 80 that performs a simulation of a predetermined operation performed by the robot 4. The robot controller 40 receives teaching data for teaching a predetermined operation to the robot 4 from the simulator 80 and controls the operation of the robot 4 on the basis of the received teaching data.

The simulator 80 includes a computing device (for example, a personal computer, a programming pendant, or the like) that includes a display screen 80A and an input device 80B, and is configured to be capable of transmitting data by being connected to the robot controller 40. A diagram in which the robot cell 1 is virtually simulated as illustrated in FIG. 1C is displayed on the display screen 80A.

A worker who assembles the robot cell 1 (hereinafter, simply "worker") or a user of the robot cell 1 inputs information, such as the arrangement position of a working unit with respect to the arrangement position of the robot 4, by using the input device 80B of the simulator 80 and causes the simulator 80 to perform a simulation.

In this manner, the arrangement position of a working unit to be arranged around the robot 4 and a predetermined operation are taught to the robot 4 by inputting the teaching data from the simulator 80 to the robot 4 via the robot controller 40. Consequently, the robot 4 performs a predetermined operation as simulated by the simulator 80.

The second surface part 3 is a perforated metal in which a plurality of holes 30 to be fixing portions for fixing a working unit used by the robot 4 is arranged in a grid (lattice) and which is formed to have a rectangular outer shape. In other words, the holes 30 are provided in the second surface part 3 such that the distance between the centers of the holes 30 arranged in substantially parallel with the X axis and the distance between the centers of the holes 30 arranged in substantially parallel with the Y axis are all equal.

Moreover, in the second surface part 3, the holes 30 provided on the outermost peripheral side in the second surface part 3 are provided such that the distance between the center of the hole 30 and the closest side configuring the outer shape of the second surface part 3 is equal.

As illustrated in FIG. 1B, the second surface part 3 is supported at four corners of the lower surface by four leg portions that are arranged on the floor 10 and have the same length. In other words, the second surface part 3 is supported in substantially parallel with the first surface part 2 at a position higher than the first surface part 2 in the substantially vertical direction (positive direction of the Z axis).

Then, a plurality of working units used by the robot 4 for making pizza 5 is arranged on the second surface part 3. In this embodiment, as illustrated in FIG. 1A, as the working units, a work tray 50, on which the pizza 5 is made, is arranged near the front side and a serving tray 51 for serving the pizza 5 to the customer is arranged at a position farther from the work tray 50 in the forward direction of the robot 4 as viewed from the robot 4.

Moreover, on the second surface part 3, a dough tray 52, on which pie dough is stacked, and an oven 55, which bakes the pizza 5, are arranged as the working units on the right and left sides of the work tray 50, respectively, as viewed from the robot 4.

Furthermore, on the second surface part 3, as the working units, an ingredient case 54, which stores many kinds of ingredients as toppings for the pizza 5, is arranged at a position diagonally forward to the right and farther from the robot 4 than the dough tray 52 as viewed from the robot 4 and a sauce case 53, in which many kinds of pizza sauces are stored, is arranged diagonally forward to the left between the work tray 50 and the oven 55 as viewed from the robot 4.

When these working units are arranged, a worker or a user needs to input the arrangement position of each working unit with respect to the arrangement position of the robot 4 to the simulator 80 as described above. At this time, it is extremely troublesome to perform a work of accurately measuring the arrangement position of each working unit with respect to the arrangement position of the robot 4.

Therefore, in the robot cell 1, the second surface part 3 is composed of a perforated metal in which the holes 30 are regularly arranged in a grid. Furthermore, in the robot cell 1, as illustrated in FIG. 1B, projected portions 5a to be fitted into the holes 30 in the second surface part 3 are provided at a plurality of positions (for example, four corners of the bottom surface) on the bottom surface of each working unit and each working unit is arranged at a predetermined arrangement position by fitting the projected portions 5a into the holes 30.

As described above, the holes 30 are regularly arranged at equal intervals in the X-axis direction and the Y-axis direction in the second surface part 3. Consequently, if the relative position between the arrangement position of the robot 4 and the arrangement position of the second surface part 3 is accurately measured, a worker or a user can thereafter easily obtain the arrangement position of each working unit with respect to the arrangement position of the robot 4 by using the holes 30 in the second surface part 3 as a scale.

In other words, a worker or a user can easily obtain the arrangement position of each working unit with respect to the arrangement position of the robot 4 without performing a work of accurately measuring the arrangement position of each working unit with respect to the arrangement position of the robot 4.

Therefore, according to the robot cell 1, it is possible to teach accurate arrangement positions of the working units to the robot 4 without performing a troublesome work by inputting information, such as the arrangement position of each working unit with respect to the arrangement position of the robot 4 obtained as above, to the simulator 80.

When the robot cell 1 as above is assembled, first, the first surface part 2 and the second surface part 3 are arranged at predetermined positions. Thereafter, the robot 4 is positioned and arranged at a predetermined position on the first surface part 2. Then, each of the working units is fixed to a predetermined position by using the predetermined holes 30 selected from among the holes 30 in the second surface part 3.

Moreover, in some cases, after the robot cell 1 is assembled in the factory and teaching of an operation by the simulation is performed, the robot cell 1 is once disassembled and thereafter is reassembled on site where the robot cell 1 is used.

In this case, when the robot cell 1 is assembled on site, the relative position between the robot 4 and the second surface part 3 when the robot cell 1 is assembled in the factory is displaced from the relative position between the robot 4 and the second surface part 3 when the robot cell 1 is assembled on site in some cases.

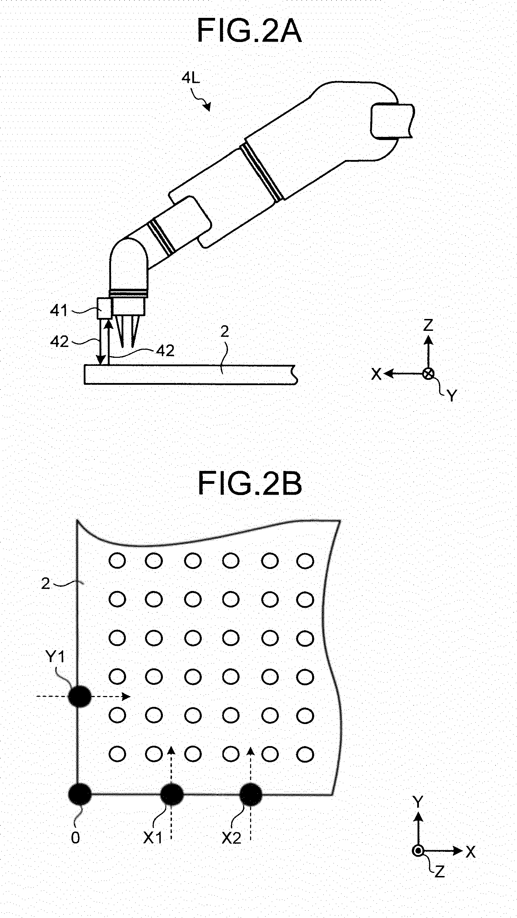

Thus, the robot cell 1 can be configured such that the displacement can be corrected. Next, the robot cell configured to be able to correct the displacement will be explained with reference FIG. 2A and FIG. 2B.

FIG. 2A is an explanatory diagram illustrating a part of the robot 4 to which a displacement correction function is added according to the first embodiment and FIG. 2B is an explanatory diagram illustrating an operation of the robot 4 to which the displacement correction function is added according to the first embodiment.

As illustrated in FIG. 2A, the robot 4 to which the displacement correction function is added is provided with a sensor 41, which detects the edge of the second surface part 3, for example, on the robot hand at the tip of the left arm 4L. The sensor 41 is a light reflection sensor that emits light beam 42, such as infrared light and laser light, to the top surface of the second surface part 3 and receives the light beam 42 reflected from the second surface part 3. Then, the robot 4 detects the edge of the second surface part 3 on the basis of the received light intensity of the light beam 42 by the sensor 41.

When the robot cell 1 is assembled in the factory, the robot 4 detects and stores a predetermined apex on the outer shape of the second surface part 3, for example, the apex on the left near side when the arranged second surface part 3 is seen from the robot 4, as the origin.

Specifically, after the robot cell 1 is assembled in the factory, the robot 4 scans the region on the left near side of the second surface part 3 by the light beam 42 as indicated by the dotted-line arrows in FIG. 2B by operating the left arm 4L while emitting the light beam 42 by the sensor 41.

At this time, the robot 4, for example, detects two points X1 and X2 at the edge of the second surface part 3 by scanning the second surface part 3 twice in the direction substantially parallel to the Y axis by the light beam 42 from the sensor 41 and calculates a line connecting the two points X1 and X2.

Next, the robot 4 detects one point Y1 at the edge of the second surface part 3 by scanning the second surface part 3 once in the direction substantially parallel to the X axis by the light beam 42 from the sensor 41. Then, the robot 4 calculates the intersection of the line that passes the point Y1 and is substantially parallel to the Y axis and the line connecting the two points X1 and X2 calculated above and stores the coordinates of the origin O.

Furthermore, after the robot cell 1 is assembled on site, the robot 4 calculates the origin O again on site by performing an operation similar to the operation performed in the factory and compares the coordinates of the calculated origin O with the coordinates of the origin O stored at the factory.

At this time, when there is a displacement between the coordinates of the origin O calculated on site and the coordinates of the origin O stored at the factory, the robot 4 overwrites the coordinates of the origin O stored at the factory with the coordinates of the origin O calculated on site and stores it.

In this manner, the robot 4 corrects the displacement between the position of the origin O when the robot cell 1 is assembled in the factory and the position of the origin O when the robot cell 1 is assembled on site. Consequently, even when a displacement occurs between the position of the origin O when the robot cell 1 is assembled in the factory and the position of the origin O when the robot cell 1 is assembled on site, the robot 4 can perform a work appropriately using the working units by performing a predetermined operation with the position of the corrected origin O as a reference.

Moreover, in the example illustrated in FIG. 1A and FIG. 1B, an explanation is given of a case where each working unit is arranged directly on the second surface part 3; however, the robot cell 1 may be configured such that a plurality of working units to be used in a work is correctively arranged on the second surface part 3 by using a jig.

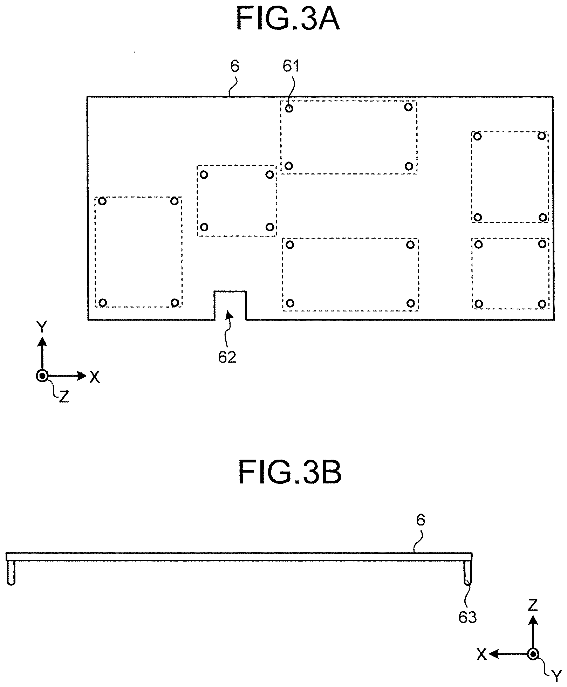

Next, an explanation is given of a case where a plurality of working units to be used in a work is correctively arranged on the second surface part 3 with reference to FIG. 3A to FIG. 5B. FIG. 3A is an explanatory diagram illustrating a jig 6 according to the first embodiment in plan view and FIG. 3B is an explanatory diagram illustrating the jig 6 according to the first embodiment in side view.

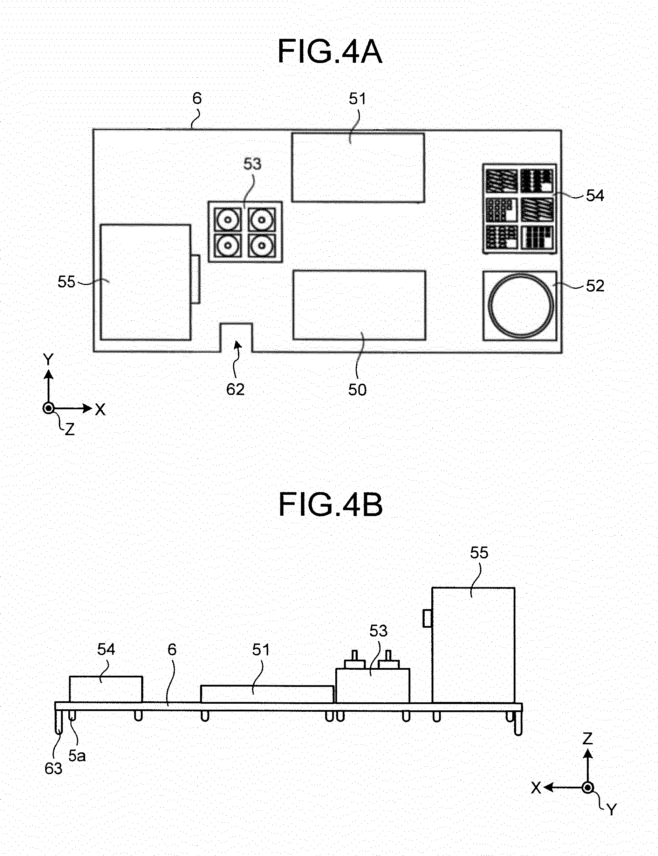

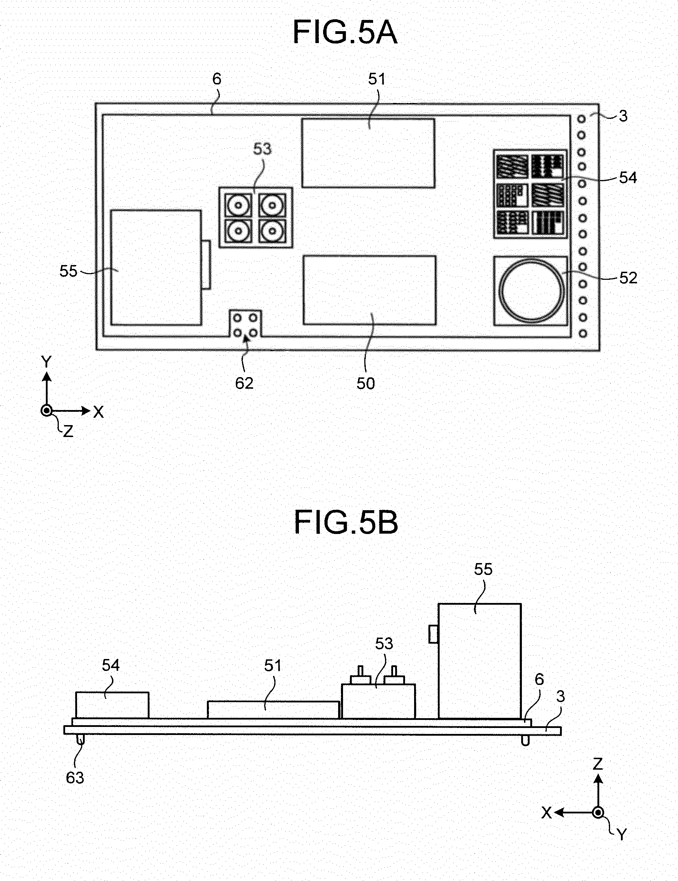

Moreover, FIG. 4A and FIG. 5A are explanatory diagrams illustrating an arrangement process of the working units using the jig 6 according to the first embodiment in plan view and FIG. 4B and FIG. 5B are explanatory diagrams illustrating the arrangement process of the working units using the jig 6 according to the first embodiment in side view.

As illustrated in FIG. 3A and FIG. 3B, the jig 6 is a plate that includes a mark 62 that indicates a reference position to be a reference of a predetermined operation performed by the robot 4 and holes 61 that function as arranging portions on which the working units are arranged at positions predetermined with respect to the mark 62.

FIG. 3A illustrates the jig 6, in which a square cutout portion is provided as the mark 62 at a predetermined position on a side (in this embodiment, one longitudinal side) of the plate having a rectangular outer shape as an example. The usage of the mark 62 is described later with reference to FIG. 5A.

Moreover, the holes 61 in the jig 6 are formed to have a diameter such that the projected portions 5a provided at four corners of the bottom surface of each working unit are fitted thereinto. These holes 61 are provided at positions such that the relative positions between the working units when each working unit is arranged on the jig 6 are the same as the relative positions between the working units illustrated in FIG. 1A. Moreover, as illustrated in FIG. 3B, projected portions 63 to be fitted into the holes 30 in the second surface part 3 are provided at four corners of the bottom surface of the jig 6.

When a plurality of working units is arranged in the robot cell 1 by using the jig 6, first, as illustrated in FIG. 4B, the projected portions 5a provided at four corners of the bottom surface of each working unit are fitted into the holes 61 provided in the jig 6.

Consequently, as illustrated in FIG. 4A, the work tray 50, the serving tray 51, the dough tray 52, the sauce case 53, the ingredient case 54, and the oven 55 to be the working units are positioned such that the positional relationship is the same as that of the relative positions illustrated in FIG. 1A and are placed on the jig 6.

Next, as illustrated in FIG. 5A, the jig 6 on which the working units are placed is arranged at a predetermined position on the second surface part 3. In other words, as illustrated in FIG. 4B, the jig 6 is arranged on the second surface part 3 by fitting the projected portions 63 provided at four corners of the bottom surface of the jig 6 into the predetermined holes 30 in the second surface part 3.

In this manner, a worker or a user can collectively arrange a plurality of working units on the second surface part 3 with ease by using the jig 6. Moreover, the relative position of each working unit arranged on the second surface part 3 is the same as the relative position illustrated in FIG. 1A.

Therefore, a worker or a user can easily teach the arrangement position of each working unit to the robot 4 by inputting the arrangement position of each working unit on the second surface part 3, which is designed in advance, to the simulator 80. When the working units are arranged on the second surface part 3 by using the jig 6, correction information for correcting for the thickness of the jig 6 is input to the simulator 80 for the operation of teaching to the robot 4.

Moreover, when the working units are arranged on the second surface part 3 by using the jig 6, the position of the mark 62 provided in the jig 6, for example, the information indicating the position of the center of gravity of the square cutout portion to be the mark 62 is input to the simulator 80. The information indicating the position of the mark 62, the correction information for correcting for the thickness of the jig 6, and the information indicating the position of each working unit are input from the simulator 80 to the robot 4 via the robot controller 40.

Then, the robot 4 performs a work using each working unit by performing a predetermined operation on the basis of the relative position between the position of the mark 62 and the position of each working unit taught from the robot controller 40 with the position of the mark 62 as a reference.

Moreover, when the working units are arranged on the second surface part 3 by using the jig 6 also, in some cases, the robot cell 1 is reassembled on site after the robot cell 1 is once assembled in the factory, simulation of the robot 4 is performed, and the robot cell 1 is disassembled.

At this time, as described above, the relative position between the robot 4 and the second surface part 3 when the robot cell 1 is assembled in the factory is displaced from the relative position between the robot 4 and the second surface part 3 when the robot cell 1 is assembled on site in some cases.

Thus, in the robot cell 1, when the working units are arranged on the second surface part 3 by using the jig 6, after the robot cell 1 is assembled on site, the robot 4 detects the position of the mark 62 by the method similar to the method illustrated in FIG. 2B by using the sensor 41.

Then, the robot 4 compares the position of the mark 62 at the time of the simulation performed in the factory with the position of the mark 62 detected on site, and when there is a displacement, the displacement is corrected. Consequently, the robot 4 can perform an accurate operation on site appropriately using each working unit.

Moreover, for example, even if a user arranges the jig 6 at an incorrect arrangement position or changes the arrangement positions of the working units arranged on the jig 6 with respect to the second surface part 3 by moving the jig 6, the robot 4 can perform an accurate work appropriately using each working unit by detecting the mark 62.

Specifically, for example, a case is considered where the top surface area of the jig 6 is smaller than the top surface area of the second surface part 3 and a user aligns the jig 6 to the right on the second surface part 3 by mistake, although the jig 6 actually needs to be aligned to the left on the second surface part 3 (see FIG. 5A).

In this manner, even if a user arranges the jig 6 at an incorrect arrangement position with respect to the second surface part 3, in the robot cell 1, the robot 4 can perform an appropriate work by detecting the position of the mark 62 of the jig 6 arranged at the incorrect position and performing a work with the position of the mark 62 as a reference of an operation.

Moreover, for example, when the top surface area of the second surface part 3 is a few times larger than the area of the second surface part 3 illustrated in FIG. 5A, a case is considered where a user largely moves the arrangement position of the jig 6 and additionally arranges a plurality of working units arranged on a different jig 6 in a free space in the second surface part 3.

In such a case, the robot cell 1 can cause the robot 4 to detect the position of the mark 62 of each jig 6 and perform a work using the working units placed on a corresponding jig 6 with the position of each mark 62 as a reference.

Moreover, in terms of the jig 6 whose arrangement position is moved or the newly arranged jig 6, it is not necessary to individually measure an accurate arrangement position of each working unit with respect to the robot 4. Therefore, according to the robot cell 1, the layout change due to the addition of a working unit can be easily performed after the robot cell 1 is assembled on site.

As illustrated in FIG. 5A and the like, when the outer shape of the jig 6 excluding the mark 62 is rectangular, the robot 4 may be caused to detect a predetermined apex on the outer shape of the jig 6 and perform a predetermined operation with the detected apex as a reference of an operation. However, if the outer shape of the jig is an irregular shape, the jig needs to be provided with a mark (for example, the mark 62) to be a reference of an operation when the robot 4 performs a predetermined operation.

In the explanation with reference to FIG. 3A to FIG. 5B, an explanation is given of the jig 6 on which all the working units used in a work by the robot 4 can be arranged as an example; however, the configuration of the jig 6 is not limited to this.

For example, it is possible to divide a plurality of working units used by the robot 4 into some groups, prepare a jig that has an arrangement area of the working units smaller than the jig 6, and arrange the working units on the second surface part 3 for each group by using the jig. With this configuration, the degree of freedom in the layout change of the working units can be further improved.

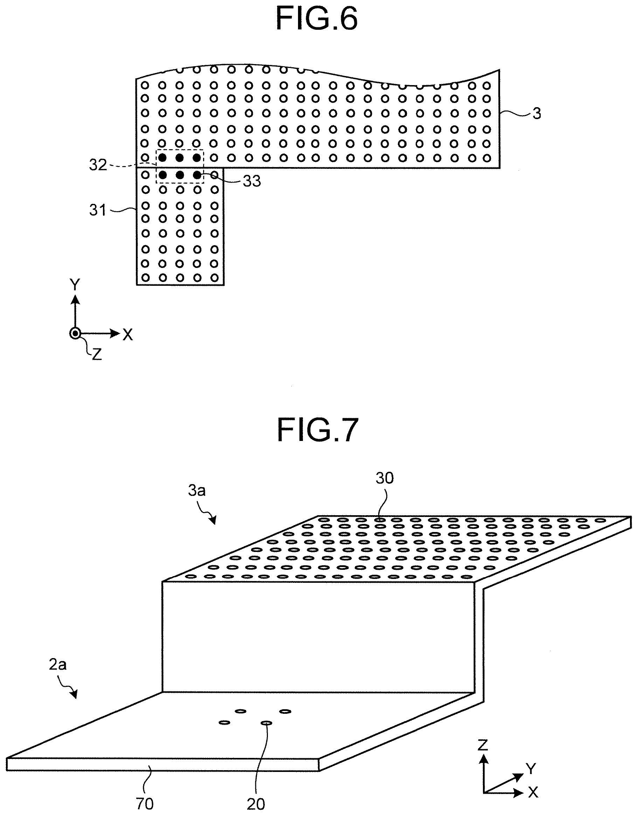

When the layout change, such as addition of a working unit to be arranged on the second surface part 3, is performed, it is necessary to extend the arrangement area of a working unit in the second surface part 3. Next, a case where the second surface part 3 is extended will be explained with reference to FIG. 6. FIG. 6 is an explanatory diagram illustrating an extending method of the arrangement area of a working unit in the second surface part 3 according to the first embodiment.

As illustrated in FIG. 6, when the arrangement area of a working unit is extended, a perforated metal 31, which has the same thickness as that of the existing second surface part 3 and in which the holes 30 are formed such that they have the same diameter and pitches (intervals) as those of the existing second surface part 3, is processed into a desired size and is additionally provided to the existing second surface part 3.

When the perforated metal 31 is additionally provided, the connecting portions of the existing second surface part 3 and the perforated metal 31 are connected by a connecting member 32 on the lower surface (surface on the opposite side of the surface on which the working units are arranged). Consequently, it is possible to configure the top surfaces of the connecting portions of the additionally provided perforated metal 31 and the existing second surface part 3 so that they are flat.

Moreover, when the perforated metal 31 is additionally provided, it is desirable that the end portions of the second surface part 3 and the perforated metal 31 be processed such that the distance from the outer periphery to the hole 30 closest to the outer periphery is half the distance between the holes 30 adjacent in the X-axis direction or the Y-axis direction.

Consequently, for example, a remaining portion of the perforated metal 31 generated when the perforated metal 31 is processed into a desired size can be used as the connecting member 32. Specifically, the remaining portion is arranged on the lower surface of the connecting portion between the perforated metal 31 and the existing second surface part 3 as the connecting member 32 and, for example, fitting pins 33 are fitted into the holes 30 that are positioned to each other, whereby the perforated metal 31 can be additionally provided easily and at low cost.

An explanation has been given of a case where the first surface part 2 and the second surface part 3 are separate parts; however, the first surface part 2 and the second surface part 3 may be integrated. Next, an explanation will be given of a case where the first surface part 2 and the second surface part 3 are integrally formed with reference to FIG. 7. FIG. 7 is an explanatory diagram illustrating the first surface part 2a and the second surface part 3a that are integrally formed according to the first embodiment.

As illustrated in FIG. 7, when the first surface part 2a and the second surface part 3a are integrally formed, for example, one steel plate 70 is formed to have two steps by a pressing machine. Then, the planar part, which is substantially parallel to the X-Y plane, of the first stage from the bottom in the steel plate 70 molded into a stepped shape is set as a first surface part 2a, and the planar part, which is substantially parallel to the X-Y plane, of the second stage from the bottom is set as a second surface part 3a.

Furthermore, in the second surface part 3a, a plurality of the holes 30 is formed, for example, by punching such that they have a size and an arrangement similar to those in the second surface part 3 illustrated in FIG. 1A. On the other hand, in the first surface part 2a, holes 20 to be fixing portions used for fixing the robot 4 are arranged at predetermined positions.

Consequently, the positional relationship between the robot 4 to be arranged on the first surface part 2a and the second surface part 3a becomes a known positional relationship as designed. In this manner, the first surface part 2a and the second surface part 3a are integrally formed and the holes 20 to be the fixing portions, to which the robot 4 is fixed, are provided in the first surface part 2a; therefore, it is not necessary to perform a work of accurately measuring the position of the second surface part 3a with respect to the robot 4 for the simulation.

As described above, according to the first embodiment, it is possible to teach accurate arrangement positions of the working units to be arranged around the robot 4 to the robot 4 without performing a troublesome work.

### (Second Embodiment)

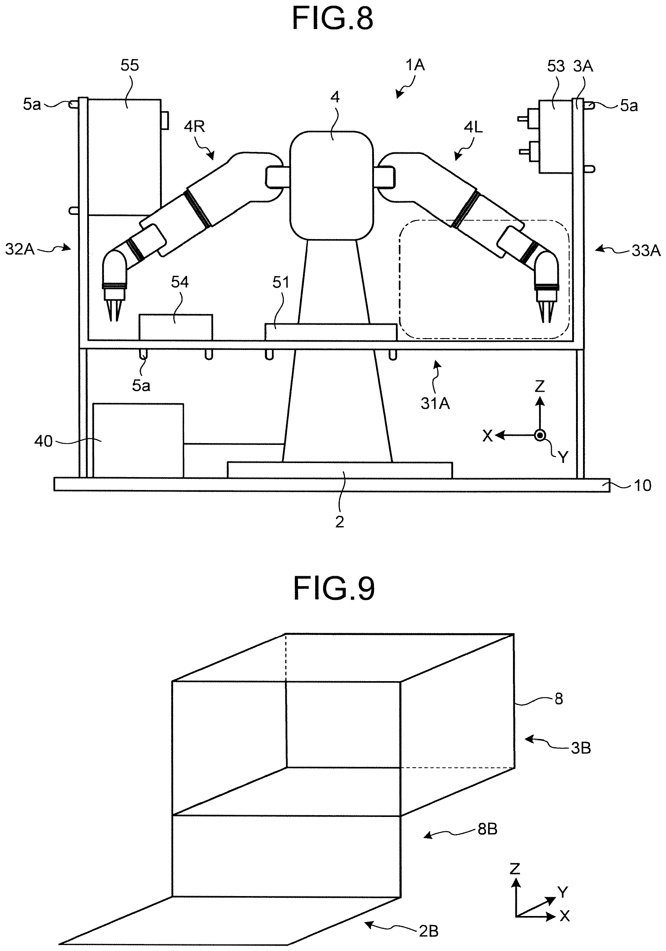

Next, a robot cell 1A according to the second embodiment will be explained with reference to FIG. 8. FIG. 8 is an explanatory diagram illustrating the robot cell 1A according to the second embodiment in front view. In the robot cell 1A, the shape of a second surface part 3A and the arrangement of some working units are different from those of the robot cell 1 according to the first embodiment. Therefore, in the following, among the components of the robot cell 1A, the same components as those of the robot cell 1 according to the first embodiment are denoted by the same reference numerals and an explanation thereof is omitted.

As illustrated in FIG. 8, the second surface part 3A in the robot cell 1A is formed to have a spatial structure that includes a parallel planar part 31A, which is a planar part substantially parallel to the first surface part 2, and non-parallel planar parts 32A and 33A, which are planar parts that are not parallel to the first surface part 2.

The parallel planar part 31A is a plate that has the same shape as the second surface part 3 according to the first embodiment and is arranged at the same position as the second surface part 3 according to the first embodiment. Moreover, the non-parallel planar parts 32A and 33A are, for example, plates that are arranged upward from the right and left end sides of the parallel planar part 31A viewed from the robot 4.

The parallel planar part 31A and the non-parallel planar parts 32A and 33A are integrally formed and holes (not shown) are formed therein such that they have the same diameter and pitches (intervals) as those in the second surface part 3 according to the first embodiment. Consequently, in the robot cell 1A, in addition to the parallel planar part 31A, the non-parallel planar parts 32A and 33A can be used as the arrangement region of the working units.

Therefore, in the robot cell 1A, as illustrated in FIG. 8, for example, the oven 55 and the sauce case 53 that were arranged on the second surface part 3 in the first embodiment can be arranged on the non-parallel planar part 32A and the second surface part 33A, respectively. Consequently, it is possible to form a free space, in which other working units are arranged, in a region indicated by the dashed line in FIG. 8, in which the sauce case 53 and the oven 55 were arranged.

In this manner, in the robot cell 1A, because it is possible to increase the arrangement region of the working units in the second surface part 3A, the layout change, such as addition of a new working unit, can be easily performed. Moreover, because the second surface part 3A is three-dimensionally formed, the strength can be increased.

In the robot cell 1A also, the first surface part 2 and the second surface part 3A may be integrally formed. Next, a first surface part 2B and a second surface part 3B, which are integrally formed, will be explained with reference to FIG. 9. FIG. 9 is an explanatory diagram illustrating the first surface part 2B and the second surface part 3B, which are integrally formed, according to the second embodiment.

As illustrated in FIG. 9, when the first surface part 2B and the second surface part 3B are integrally formed, the quadrangular tubular second surface part 3B, in which the surface substantially parallel to the Z-X plane becomes an opening surface, and the rectangular first surface part 2B, which is substantially parallel to the X-Y plane, are integrally formed, for example, by molding a tubular steel plate 8.

In this embodiment, although not shown, holes are provided in the first surface part 2B to arrange the robot 4 in a similar manner to the first surface part 2a illustrated in FIG. 7, and a plurality of holes is formed in the quadrangular tubular second surface part 3B such that they have the same diameter and pitches (intervals) as those in the second surface part 3a illustrated in FIG. 7.

Consequently, the entire inner peripheral surface of the second surface part 3B formed in a quadrangular tubular shape can be used as the arrangement region of the working units. Moreover, the positional relationship between the robot 4 to be arranged on the first surface part 2B and the second surface part 3B becomes a known positional relationship as designed by arranging the robot 4 on the first surface part 2B by using the holes in the first surface part 2B integrally formed with the second surface part 3B.

Furthermore, the strength of the first surface part 2B and the second surface part 3B can be further increased by having what is called a monocoque construction in which the first surface part 2B and the second surface part 3B are integrally formed.

As described above, according to the second embodiment, in addition to the effect obtained by the first embodiment, it is possible to increase the arrangement region of the working units and increase the mechanical strength of the second surface parts 3A and 3B on which the working units is arranged.

Moreover, the above-described first and second embodiments are examples and can be variously modified. For example, the shape of the holes provided in the first surface part or the second surface part may be changed to a rectangular or any other shape instead of the circular shape. In this case, projected portions, which are formed in a shape capable of fitting into the holes, are provided on the bottom surface of each working unit.

Moreover, the holes in the second surface part or the perforated metal to be additionally provided are not limited to being arranged in a grid and the holes may be arranged, for example, concentrically or radially centered on a predetermined reference point. In other words, the arrangement form of each hole may be arbitrary as long as the position of each hole in the second surface part or the perforated metal to be additionally provided is a known predetermined position.

Moreover, a projected portion may be provided instead of a hole at the arrangement position of each hole in the second surface part or the perforated metal to be additionally provided. In this case, recessed portions, into which the projected portions are fitted, are provided in the bottom surface of each working unit. With this configuration also, the effect similar to that in the above-described first and second embodiments can be obtained.

Moreover, the first surface part may consist of a perforated metal, in which a plurality of holes is provided in a grid, in a similar manner to the second surface part. With this configuration, when the arrangement position of the robot is changed, the position of the second surface part with respect to the robot can be calculated without measuring it.

Therefore, when the layout of the robot arrangement is changed, the simulation can be easily performed by the simulator 80 without performing a troublesome work, such as accurately measuring the position of the second surface part with respect to the robot.

Moreover, in the first and second embodiments, the working units are attached by fitting the projected portions provided on the bottom surface of each working unit into the holes provided in the second surface part or the jig; however, the configuration for attaching the working units is not limited to this.

For example, instead of providing the projected portions on the bottom surface of each working unit, a flange is provided at the peripheral surface lower end of each working unit and holes that can be aligned with the holes in the second surface part and the jig are provided in the flange. Then, each working unit may be attached by inserting removable pins to be a fastener into the aligned holes. The working unit may be attached by any fastener, such as bolts and nuts, instead of the pins.

### (Third Embodiment)

Next, another embodiment of the robot system disclosed in the present application will be explained in detail.

There is a draft chamber or a safety cabinet (biological safety cabinet) that protects a worker from hazardous substances during working. The draft chamber includes a chamber body, the inside of which functions as a work space, doors capable of opening and closing openings provided in the side walls of the chamber body, and a suction unit that is provided outside the chamber body and draws air into the chamber body (for example, see Japanese Patent Application Laid-open 2003-269763).

With the draft chamber, when a worker performs a work by wearing gloves and the like and inserting the hands into the chamber body from the openings, hazardous substances in the chamber body are prevented from leaking to the worker side from the openings; therefore, the worker can be protected from hazardous substances.

However, even if a work is performed by using the draft chamber, the hands of a worker who performs a work in the chamber body may be exposed to hazardous substances. In one aspect of the embodiment explained below, a worker is protected more surely from hazardous substances.

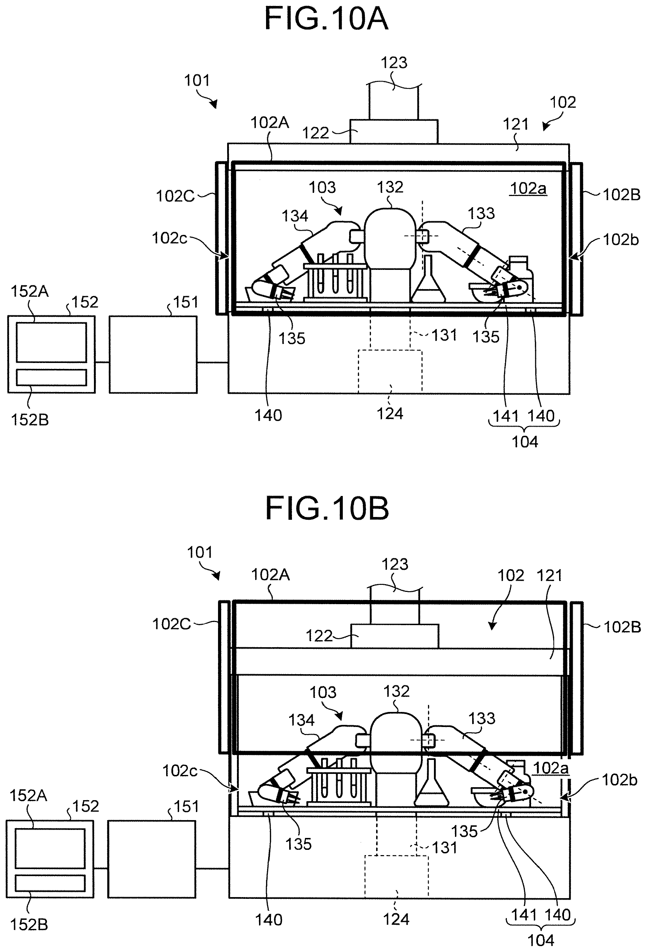

FIG. 10A and FIG. 10B are explanatory diagrams illustrating a robot system 101 according to the third embodiment. FIG. 10A illustrates a state where openings 102a, 102b, and 102c of a draft chamber 102 are closed by doors 102A, 102B, and 102C and FIG. 10B illustrates a state where the openings 102a, 102b, and 102c of the draft chamber 102 are opened by the doors 102A, 102B, and 102C.

As illustrated in FIG. 10A and FIG. 10B, the robot system 101 includes the draft chamber 102, a robot 103, a robot controller 151, and a simulator 152. The draft chamber 102 includes a chamber body 121, the doors 102A, 102B, and 102C, and a suction unit 122.

The chamber body 121 is a metallic housing, the inside of which functions as a work space. The chamber body 121 is provided with the window-like openings 102a, 102b, and 102c, through which the internal space and the external space communicate with each other, in the wall surfaces on the front side and both right and left sides. Moreover, the chamber body 121 includes the doors 102A, 102B, and 102C that can open and close the openings 102a, 102b, and 102c provided at three locations.

The three doors 102A, 102B, and 102C are each, for example, composed of a rectangular metallic frame and reinforced glass that is fitted into the inner peripheral surface of the frame and has a translucency sufficient that the inner side of the door is visible from the outer side of the door.

The doors 102A, 102B, and 102C are each configured to be able to be raised and lowered. As illustrated in FIG. 10A, when the doors 102A, 102B, and 102C are lowered, the openings 102a, 102b, and 102c are closed so that the inside of the chamber body 121 becomes an enclosed space isolated from the outside. Moreover, as illustrated in FIG. 10B, when the doors 102A, 102B, and 102C are raised, the openings 102a, 102b, and 102c are opened.

The suction unit 122 is, for example, a fan that is provided on the roof of the chamber body 121 and draws the air in the chamber body 121. The suction unit 122 includes an HEPA filter (High Efficiency Particulate Air Filter), which cleans the air drawn from the inside of the chamber body 121, and exhausts the air cleaned by the HEPA filter to the outside or the like via an exhaust duct 123.

The robot 103 is arranged on an arrangement table 124 provided on the floor of the chamber body 121 and performs a work instead of a worker. The robot 103 includes a base part 131, a trunk 132 provided on the base part 131, and arm parts 133 and 134 provided on both right and left sides of the trunk 132, respectively. The trunk 132 is configured to rotatable with respect to the base part 131.

Moreover, the arm parts 133 and 134 are, for example, robot arms that each include six movable axes indicated by the dotted lines or the black dot on the arm part 133 in FIG. 10A and FIG. 10B. A robot hand 135 that can perform a gripping operation of a workpiece is provided at the tip end side of the arm part 133. The robot 103 is connected to the robot controller 151 provided outside the chamber body 121 and performs a predetermined work in accordance with the control by the robot controller 151.

The robot controller 151 is connected to the simulator 152 that performs a simulation of a predetermined operation performed by the robot 103. The robot controller 151 receives teaching data for teaching a predetermined operation to the robot 103 from the simulator 152 and controls the operation of the robot 103 on the basis of the received teaching data.

The simulator 152 includes a computing device (for example, a personal computer, a programming pendant, or the like) that includes a display screen 152A and an input device 152B, and is configured to be capable of transmitting data by being connected to the robot controller 151. A schematic diagram of the inside of the chamber body 121 as viewed from the top is displayed on the display screen 152A.

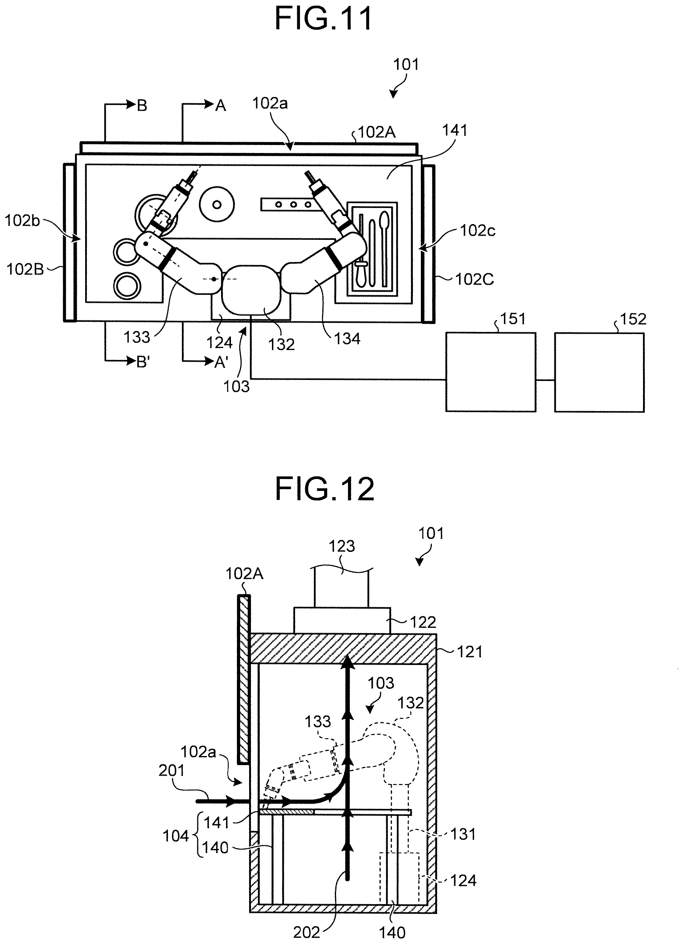

Moreover, in the chamber body 121, a work table 104 is provided on the side of the wall surfaces in which the openings 102a, 102b, and 102c are provided. The work table 104 includes leg portions 140 and a tabletop 141 supported by the leg portions 140. The shape of the tabletop 141 will be described later with reference to FIG. 11.

The leg portions 140 support the tabletop 141 such that the level of the tabletop 141 is higher than the level of the top surface of the arrangement table 124 to be the arrangement surface of the robot 103. Consequently, in the draft chamber 102, when the openings 102a, 102b, and 102c are opened by raising the doors 102A, 102B, and 102C, the air near the top surface of the tabletop 141 can be efficiently introduced to the ceiling side of the chamber body 121 and exhausted. This point will be described later with reference to FIG. 12.

The workflow performed by the robot system 101 will be briefly explained. In this embodiment, an explanation will be given of a case where a medicine preparation work is performed by the robot 103; however, the work performed by the robot 103 is not limited to the medicine preparation work.

First, before medicine and equipment used in the medicine preparation work are arranged on the work table 104, a worker inputs a predetermined arrangement position of each medicine and equipment on the work table 104 and a work procedure performed by the robot 103 to the simulator 152.

The simulator 152 performs a simulation of the medicine preparation work operation performed by the robot 103 on the basis of the information input by the worker and outputs the teaching data of the medicine preparation operation generated by the simulation to the robot controller 151.

Next, the worker opens the openings 102a, 102b, and 102c by raising the doors 102A, 102B, and 102C of the draft chamber 102 in a state where the air in the chamber body 121 is drawn by the suction unit 122.

Then, the worker conveys bins in which medicine to be used in the medicine preparation work is contained and each equipment to be used in the medicine preparation work into the chamber body 121 from the openings 102a, 102b, and 102c. At this time, the worker arranges the bins in which medicine is contained and the equipment at the predetermined arrangement positions input to the simulator 152.

Thereafter, the worker closes the openings 102a, 102b, and 102c by lowering the doors 102A, 102B, and 102C of the draft chamber 102, and causes the robot controller 151 to start operation control of the robot 103. Consequently, the robot 103 starts the medicine preparation work in the chamber body 121.

In this manner, in the robot system 101, because the medicine preparation work is performed by the robot 103 instead of a worker in the chamber body 121 isolated from the outside, for example, even if hazardous substances are generated by preparing a medicine, a worker can be protected from the hazardous substances more surely.

Moreover, even if the openings 102a, 102b, and 102c are opened by raising the doors 102A, 102B, and 102C of the draft chamber 102 during a work by the robot 103, the air in the chamber body 121 is drawn by the suction unit 122; therefore, the air does not leak to the outside from the openings 102a, 102b, and 102c.

Therefore, according to the robot system 101, even if hazardous substances are generated by preparing a medicine, the hazardous substances are suppressed from leaking to the outside from the openings 102a, 102b, and 102c, whereby a worker can be protected more surely.

Next, the shape of the tabletop 141 of the work table 104 will be explained with reference to FIG. 11. FIG. 11 is an explanatory diagram of the inside of the draft chamber 102 according to the third embodiment in top view. FIG. 11 illustrates a state where the ceiling of the chamber body 121 is removed.

In this embodiment, among the components illustrated in FIG. 11, the same components as those illustrated in FIG. 10A and FIG. 10B are denoted by the same reference numerals as those illustrated in FIG. 10A and FIG. 10B and an explanation thereof is omitted.

As illustrated in FIG. 11, the tabletop 141 of the work table 104 is arranged between the wall surfaces, in which the openings 102a, 102b, and 102c of the chamber body 121 are provided, and the robot 103. Consequently, a worker can easily arrange equipment and the like used in a work on the tabletop 141 from the openings 102a, 102b, and 102c.

Moreover, the tabletop 141 is formed in a shape that surrounds the robot 103 in a C-shape when viewed from the top along the three adjacent wall surfaces of the chamber body 121. In the robot system 101, the robot 103 can use all the area around the robot 103 excluding the back surface side as a work area; therefore, it is possible to reduce a dead space that cannot be used as a work area in the internal space of the chamber body 121 as much as possible.

Moreover, as described above, in the robot system 101, the openings 102a, 102b, and 102c are provided in the front surface and the both right and left side surfaces of the chamber body 121. Consequently, when a worker arranges equipment and the like used in a work on the both right and left sides of the robot 103, the worker can carry the equipment and the like into the chamber body 121 from the openings 102b and 102c provided in the right and left side surfaces of the chamber body 121.

Therefore, even if the predetermined arrangement position of equipment and the like used in a work is on the both right and left sides of the robot 103, a worker can accurately arrange the equipment and the like at the predetermined arrangement position input to the simulator 152.

Next, the operation effect obtained by providing the tabletop 141 of the work table 104 at a position higher than the arrangement surface of the robot 103 will be explained with reference to FIG. 12. FIG. 12 is an explanatory diagram illustrating an operation effect of the work table 104 according to the third embodiment.

FIG. 12 schematically illustrates a cross section taken along line A-A' in FIG. 11. Moreover, in FIG. 12, in order to illustrate the airflow inside the chamber body 121, equipment arranged on the tabletop 141 is not illustrated and the robot 103 is illustrated by the dotted line.

Moreover, in this embodiment, among the components illustrated in FIG. 12, the same components as those illustrated in FIG. 10A and FIG. 10B are denoted by the same reference numerals as those illustrated in FIG. 10A and FIG. 10B and an explanation thereof is omitted.

As illustrated in FIG. 12, when the opening 102a is opened by raising the door 102A in a state where the air in the chamber body 121 is drawn by the suction unit 122, air 201 outside the chamber body 121 is drawn into the chamber body 121.

If the internal space of the chamber body 121 is partitioned by the tabletop 141, the air 201 drawn into the chamber body 121 from the outside of the chamber body 121 is drawn obliquely upward toward the arrangement position of the suction unit 122.

In other words, the air 201 drawn into the chamber body 121 from the outside is drawn into the suction unit 122 without passing near the top surface of the tabletop 141. Therefore, retention of air may occur near the top surface of the tabletop 141.

At this time, when hazardous substances are generated near the tabletop 141, if a worker inserts the hands into a portion near the tabletop 141 without wearing gloves or gloves on the hands inserted into a portion near the tabletop 141 are torn, the worker's hands are at the risk of exposure to hazardous substances.

Thus, in the robot system 101, the region, the level of which is lower than the tabletop 141, is formed in the chamber body 121 by providing the work table 104 such that the level of the tabletop 141 is higher than the arrangement surface of the robot 103.

Consequently, in the robot system 101, when the air in the chamber body 121 is drawn by the suction unit 122, the flow of air 202 is formed in the chamber body 121 such that it is directed to the region, the level of which is higher than the tabletop 141, from the region, the level of which is lower than the tabletop 141.

In this manner, the flow of the air 202 in the upward direction from the region, the level of which is lower than the tabletop 141, is formed in the chamber body 121; therefore, the air retaining near the tabletop 141 is attracted to the flow of the air 202 in the upward direction and is drawn by the suction unit 122.

Therefore, according to the robot system 101, even if hazardous substances are generated near the tabletop 141, it is possible to suppress the air including the hazardous substances from retaining near the tabletop 141. Thus, a worker can be protected from hazardous substances more surely.

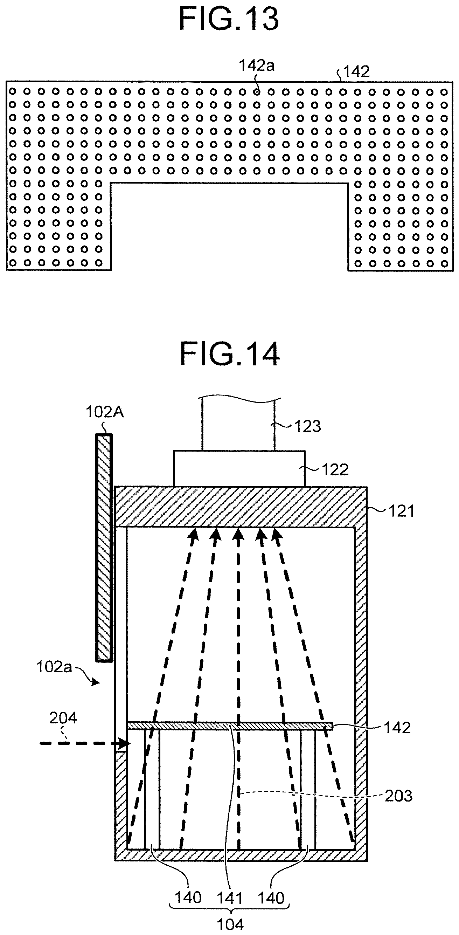

An explanation has been given of a case where the tabletop 141 of the work table 104 is a flat plate; however, it is possible to use a component, in which a plurality of through holes penetrating from front to back is formed, as the tabletop 141. Next, a case where a tabletop, in which a plurality of through holes penetrating from front to back is formed, is provided will be explained with reference to FIG. 13 and FIG. 14.

FIG. 13 is an explanatory diagram illustrating a tabletop 142 having a plurality of through holes 142a according to the third embodiment in top view and FIG. 14 is an explanatory diagram illustrating an operation effect of the tabletop 142 having the through holes 142a according to the third embodiment. FIG. 14 schematically illustrates a cross section taken along line B-B' in FIG. 11 in a case where the tabletop 141 illustrated in FIG. 11 is replaced with the tabletop 142 in which the through holes 142a are provided.

Moreover, in this embodiment, among the components illustrated in FIG. 13 and FIG. 14, the same components as those illustrated in FIG. 10A and FIG. 10B are denoted by the same reference numerals as those illustrated in FIG. 10A and FIG. 10B and an explanation thereof is omitted.

As illustrated in FIG. 13, the through holes 142a penetrating from front to back are formed in the tabletop 142. The outer shape of the tabletop 142 is the same as that of the tabletop 141 illustrated in FIG. 11 and is formed in a C-shape when viewed from the top to surround the robot 103 excluding the back surface side.

With the provision of the tabletop 142, in the robot system 101, as illustrated in FIG. 14, when the air in the chamber body 121 is drawn by the suction unit 122, the flow of air 203, which passes the through holes 142a of the tabletop 142 and is directed to the top surface side of the tabletop 142 from the lower surface side of the tabletop 142, is formed.

Therefore, according to the tabletop 142, when hazardous substances are generated due to a work performed on the top surface of the tabletop 142, a worker can be protected from hazardous substances more surely by efficiently drawing the air that includes hazardous substances by the suction unit 122 from a portion near the top surface of the tabletop 142.

When the tabletop 142 having the through holes 142a is provided, as illustrated in FIG. 14, the tabletop 142 is arranged such that the level of the lower surface to be the back surface is higher than the level of the lower side edge portion of the opening 102a of the chamber body 121.

Consequently, when the opening 102a is opened by raising the door 102A in a state where the air in the chamber body 121 is drawn by the suction unit 122, air 204 outside the chamber body 121 can be introduced into the chamber body 121 from the side lower than the lower surface to be the back surface of the tabletop 142.

Then, the air 204 introduced in the chamber body 121 from the side lower than the lower surface of the tabletop 142 passes through the through holes 142a provided in the tabletop 142 and is drawn by the suction unit 122. In this manner, the air 204 outside the chamber body 121, which does not include hazardous substances and the like, is caused to pass from the lower side to the upper side of the tabletop 142, whereby the air near the top surface of the tabletop 142, which may include hazardous substances, can be drawn and exhausted by the suction unit 122 more surely.

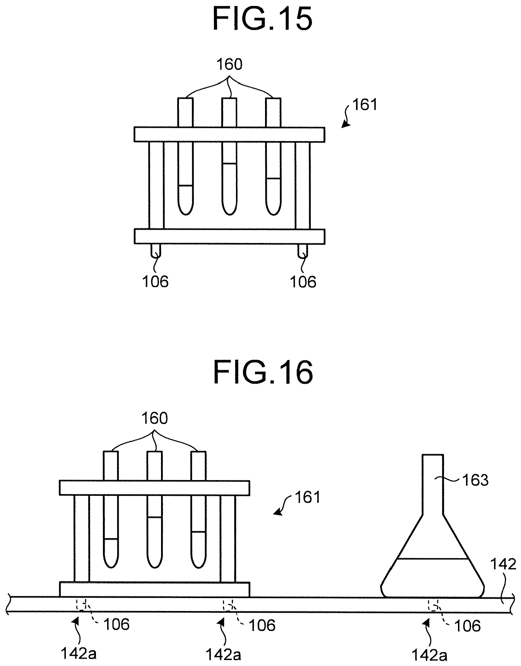

Moreover, when the through holes 142a are provided in the tabletop 142, each through hole 142a is provided at a predetermined position in the tabletop 142. Consequently, in the robot system 101, it is possible to easily determine a predetermined arrangement position of equipment, which is used in a work, with respect to the tabletop 142 and input the predetermined arrangement position to the simulator 152. Next, this point will be explained with reference to FIG. 15 and FIG. 16.

FIG. 15 is an explanatory diagram illustrating equipment arranged on the tabletop 142 according to the third embodiment and FIG. 16 is an explanatory diagram when equipment is arranged on the tabletop 142 according to the third embodiment. When the through holes 142a are arranged at predetermined positions in the tabletop 142, as illustrated in FIG. 15, for example, projecting fitting portions 106, which can be fitted into the through holes 142a, are provided on the bottom surface of equipment to be used in a work, such as a jig 161 that sets test tubes 160 upright, at intervals such that the fitting portions 106 can be fitted into the through holes 142a.

For example, when the jig 161 is arranged on the tabletop 142, as illustrated in FIG. 16, the jig 161 is arranged by fitting the fitting portions 106 provided on the bottom surface of the jig 161 into the through holes 142a of the tabletop 142. For example, in terms of equipment, such as a flask 163, that is arranged on the tabletop 142 without using the jig 161, the fitting portion 106 is directly attached to the bottom surface of the equipment (in this embodiment, the flask 163).

Consequently, a worker can easily determine a predetermined arrangement position of equipment on the tabletop 142 by determining the through holes 142a into which the fitting portions 106 of each equipment are fitted. Moreover, because the position of each through hole 142a, which is provided in the tabletop 142, in the tabletop 142 is known, a worker can easily and accurately input the position of each through hole 142a, into which the fitting portion 106 of each equipment is fitted, in the tabletop 142 to the simulator 152 as a predetermined arrangement position.

Moreover, displacement of equipment can be prevented from occurring on the tabletop 142 during a work by providing the fitting portion 106 fittable into the through hole 142a on the bottom surface of each working unit used in a work. Therefore, a work error of the robot 103 due to displacement of equipment can be prevented.

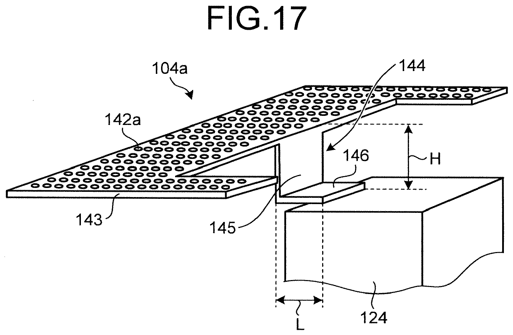

Next, a modification of the work table will be explained with reference to FIG. 17. FIG. 17 is a perspective explanatory diagram illustrating a work table 104a according to the modification of the third embodiment. As illustrated in FIG. 17, the work table 104a according to the modification includes a tabletop 143 and a leg portion 144.

The tabletop 143 has the same shape as the tabletop 142 illustrated in FIG. 13. In other words, the tabletop 143 is a plate having a C-shape when viewed from the top, which surrounds the robot 103 except for the back surface side, and is provided with the through holes 142a at predetermined positions.

When the leg portion 144 is arranged in the chamber body 121, the leg portion 144 includes a vertical plate portion 145 that depends downward from the central portion in the peripheral edge on the side facing the robot 103 and a horizontal plate portion 146 that is connected to the lower end of the vertical plate portion 145 and is parallel to the tabletop 143.

The work table 104a is arranged on the top surface of the arrangement table 124, on which the robot 103 is arranged in the chamber body 121, in a state where the lower surface of the horizontal plate portion 146 of the leg portion 144 is in contact with the arrangement table 124. Then, when the work table 104a is used, the robot 103 is arranged in a state where the front surface of the base part 131 is in contact with the end portion on the robot 103 side of the horizontal plate portion 146 of the leg portion 144.

In this manner, it is possible to accurately calculate a height H from the top surface of the arrangement table 124 to the top surface of the tabletop 143 and a distance L from the robot 103 to the tabletop 143 on the basis of the size of the leg portion 144 and the thickness of the tabletop 143 by arranging the work table 104a and the robot 103 on the top surface of the arrangement table 124.

Therefore, the simulator 152 can accurately calculate the three-dimensional relative position of each through hole 142a with respect to the robot 103 by storing the height H and the distance L in the simulator 152 in advance, thus, more accurate teaching data can be generated.

As described above, according to the robot system 101 in the third embodiment, because the robot 103 performs a work in the chamber body 121 instead of a worker, a worker can be protected from hazardous substances generated during the work more surely.

Moreover, the robot system 101 includes the work table 104 that is provided on the side of the wall surfaces, in which the openings 102a, 102b, and 102c of the chamber body 121 are provided, and that includes the tabletop 141 at a position higher than the arrangement surface of the robot 103. Consequently, according to the robot system 101, it is possible to efficiently draw and exhaust the air near the top surface of the tabletop 141 by the suction unit 122.

### (Fourth Embodiment)

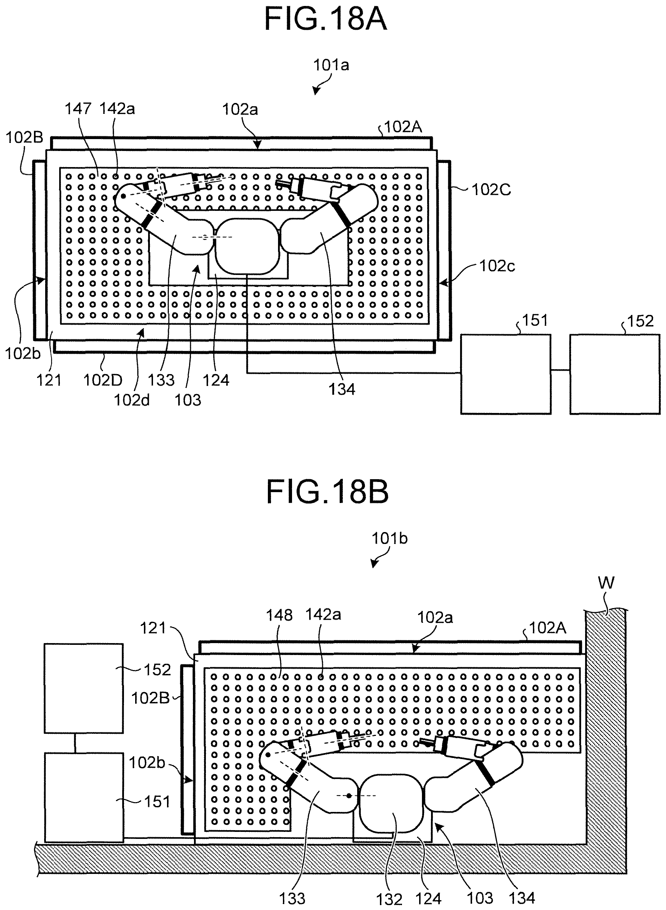

Next, a robot system 101a according to the fourth embodiment will be explained with reference to FIG. 18A. FIG. 18A is an explanatory diagram illustrating the robot system 101a according to the fourth embodiment. Among the components illustrated in FIG. 18A, the same components as those illustrated in FIG. 10A and FIG. 10B are denoted by the same reference numerals as those illustrated in FIG. 10A and FIG. 10B and an explanation thereof is omitted. FIG. 18A illustrates a state where the ceiling of the chamber body 121 is removed.

As illustrated in FIG. 18A, the robot system 101a according to the fourth embodiment is different from the robot system 101 illustrated in FIG. 11 in that the chamber body 121 includes an opening 102d and a door 102D. Moreover, the shape of a tabletop 147 of the work table 104 when viewed from the top is different from that of the robot system 101 illustrated in FIG. 11.

Specifically, the robot system 101a further includes the opening 102d also in the wall surface of the back surface side of the robot 103 of the chamber body 121 and the door 102D that can open and close the opening 102d. In a similar manner to the other doors 102A, 102B, and 102C, the door 102D is configured to be able to see the inner side of the door 102D from the outer side of the door 102D.

Therefore, according to the robot system 101a, for example, it is possible to check the work performed by the robot 103 from any direction around the chamber body 121 by arranging the chamber body 121 in the center of the room.

Moreover, the tabletop 147 provided in the robot system 101a is formed in a shape such that the robot 103 is completely surrounded in an O shape when viewed from the top. In a similar manner to the tabletop 142 illustrated in FIG. 13, the through holes 142a are formed in the tabletop 147 at predetermined positions.

According to the robot system 101a, because all the area around the robot 103 can be used as a work area of the robot 103 in the chamber body 121, the work efficiency can be improved.

As described above, according to the robot system 101a in the fourth embodiment, the work efficiency can be improved by using all the area around the robot 103 as a work area of the robot 103; therefore, it is possible to check the work performed by the robot 103 from any direction around the chamber body 121.

### (Fifth Embodiment)

Next, a robot system 101b according to the fifth embodiment will be explained with reference to FIG. 18B. FIG. 18B is an explanatory diagram illustrating the robot system 101b according to the fifth embodiment. Among the components illustrated in FIG. 18B, the same components as those illustrated in FIG. 10A and FIG. 10B are denoted by the same reference numerals as those illustrated in FIG. 10A and FIG. 10B and an explanation thereof is omitted. FIG. 18B illustrates a state where the ceiling of the chamber body 121 is removed.

As illustrated in FIG. 18B, the robot system 101b according to the fifth embodiment is different from the robot system 101 illustrated in FIG. 11 in that the opening 102c and the door 102C are not provided in the chamber body 121. Moreover, the shape of a tabletop 148 of the work table 104 when viewed from the top is different from that of the robot system 101 illustrated in FIG. 11.

The tabletop 148 provided in the robot system 101b is formed in a shape such that the robot 103 is surrounded in an L-shape along the wall surfaces in which the openings 102a and 102b are provided when viewed from the top. In a similar manner to the tabletop 142 illustrated in FIG. 13, the through holes 142a are formed in the tabletop 148 at predetermined positions.

According to the robot system 101b, for example, the chamber body 121 can be arranged at the corner of the room by arranging the chamber body 121 in a state where the side wall, in which the openings 102a and 102b are not provided, in the chamber body 121 is in contact with the side wall W in the room.

As described above, according to the robot system 101b in the fifth embodiment, because the chamber body 121 can be arranged at the corner of the room, the corner portions of the room can be efficiently utilized.

Such terms "substantially horizontal","substantially vertical", "substantially parallel", "substantially orthogonal" are not intended to be mathematically defined. These terms do not exclude a reasonable degree of error for persons skilled in the art.

## Claims

1. A robot cell (1, 1A) comprising:
a first surface part (2, 2a, 2B) on which a robot (4, 103) that is configured to perform a work by performing a predetermined operation is arranged;
a second surface part (3, 3a, 3A, 3B) in which a plurality of fixing portions (30) that are used to fix a working unit used in the work by the robot (4, 103) are provided at predetermined positions, and to which the working unit is fixed by using one or more fixing portions (30) selected from the fixing portions (30), wherein
the robot (4, 103) is configured to perform the work by using the working unit fixed to the second surface part (3, 3a, 3A, 3B) and includes a sensor (41) configured to detect a predetermined position of the second surface part (3, 3a, 3A, 3B), which position is associated with the plurality
of fixing portions (30), and to perform the predetermined operation by using the detected predetermined position as a reference,
the second surface part (3, 3a, 3A, 3B) is formed of a perforated metal in which the fixing portions (30) include holes regularly arranged at equal intervals in the X-axis direction and the Y-axis direction and forms a scale configured to obtain the arrangement position of the working unit with respect to the arrangement position of the robot (4),
the second surface part (3) is supported in parallel with the first surface part (2) at a position higher than the first surface part (2) in the Z-axis direction.

2. The robot cell (1, 1A) according to claim 1, further comprising a jig (6) that includes a mark (62) that indicates a reference position to be a reference of the predetermined operation and an arranging portion (61) on which the working unit is arranged at a position predetermined with respect to the mark (62), and is fixed to the second surface part (3, 3a, 3A, 3B) by using the fixing portion (30), wherein the sensor (41) is configured to detect a position of the mark (62).

3. The robot cell (1, 1A) according to claim 1 or claim 2, further comprising a robot controller (40) configured to receive teaching data for teaching the predetermined operation to the robot (4, 103) from a simulator (80) that is configured to perform a simulation of the predetermined operation performed by the robot (4, 103), and to control an operation of the robot (4, 103) on a basis of received teaching data.

4. The robot cell (1, 1A) according to any one of claims 1 to 3, wherein the first surface part (2, 2a, 2B) is provided with a fixing portion (20) that is used to fix the robot (4, 103) at a predetermined position, and is integrally formed with the second surface part (3, 3a, 3A, 3B).

5. The robot cell (1, 1A) according to any one of claims 1 to 4, wherein
the second surface part (3, 3a, 3A, 3B) includes
a planar part substantially parallel to the first surface part (2, 2a, 2B), and
a planar part that is integrally formed with the planar part and is not substantially parallel to the first surface part (2, 2a, 2B).

6. The robot cell (1, 1A) according to any one of claims 1 to 5, further comprising:
a draft chamber (102) that includes
a chamber body (121), an inside of which becomes a work space of the robot (103),
a door (102A, 102B, 102C, 102D) capable of opening and closing an opening (102a, 102b, 102c, 102d) provided in a wall surface of the chamber body (121), and
a suction unit (122) that is provided outside the chamber body (121) and draws air in the chamber body (121); and
a work table (104, 104a) which is provided on a side of the wall surface in which the opening (102a, 102b, 102c, 102d) is provided, and in which the second surface part (3, 3a, 3A, 3B) to be a tabletop (141, 142, 143, 147, 148) is arranged at a position higher than an arrangement surface (124) of the robot (103).

7. The robot cell (1, 1A) according to claim 6, wherein the tabletop (141, 142, 143, 147, 148) is arranged between the wall surface in which the opening (102a, 102b, 102c, 102d) is provided and the robot (103).

8. The robot cell (1, 1A) according to claim 6 or claim 7, wherein the opening (102a, 102b, 102c, 102d) is provided in two or more wall surfaces of the chamber body (121).

9. The robot cell (1, 1A) according to claim 8, wherein
the opening (102a, 102b, 102c, 102d) is provided in each of adjacent three wall surfaces, and
the tabletop (102a, 102b, 102c, 102d) is formed to surround the robot (103) along the adjacent three wall surfaces.

10. The robot cell (1, 1A) according to claim 6, wherein the tabletop (141, 142, 143, 147, 148) is arranged such that a level of a surface on a back side is higher than a position of a lower side edge portion of the opening (102a, 102b, 102c, 102d), and the suction unit (122) draws air in the chamber body (121) from a position higher than a level of a surface on a front side of the tabletop (141, 142, 143, 147, 148).

11. An assembling method of a robot cell (1, 1A) comprising:
arranging a robot (4, 103) that performs a work by performing a predetermined operation on a first surface part (2, 2a, 2B);
fixing a working unit used in the work by the robot (4, 103) to a second surface part (3, 3a, 3A, 3B) in which a plurality of fixing portions (30) that are used to fix the working unit is arranged at a predetermined position by using a fixing portion (30) selected from the fixing portions (30), the robot (4, 103) that performs the work by using the working unit fixed to the second surface part (3, 3a, 3A, 3B) includes a sensor (41) detecting a predetermined position of the second surface part (3, 3a, 3A, 3B), which position is associated with the plurality of fixing portions (30), and performing the predetermined operation by using the detected predetermined position as a reference,
wherein the second surface part (3, 3a, 3A, 3B) is formed of a perforated metal in which the fixing portions (30) include holes regularly arranged in a grid and used as a scale to obtain the arrangement position of the working unit with respect to the arrangement position of the robot (4), the second surface part (3) is supported in parallel with the first surface part (2) at a position higher than the first surface part (2) in the vertical direction.

## Patentansprüche

1. Roboterzelle (1, 1A), umfassend:
einen ersten Flächenabschnitt (2, 2a, 2B), auf dem ein Roboter (4, 103) angeordnet ist, der so konfiguriert ist, dass er eine Arbeit durch Ausführen eines vorbestimmten Vorgangs durchführt;
einen zweiten Flächenabschnitt (3, 3a, 3A, 3B), in dem eine Vielzahl von Befestigungsabschnitten (30), die verwendet werden, um eine Arbeitseinheit zu befestigen, die bei der Arbeit durch den Roboter (4, 103) verwendet wird, an vorbestimmten Positionen vorgesehen ist, und an dem die Arbeitseinheit unter Verwendung eines oder mehrerer Befestigungsabschnitte (30) befestigt wird, die aus den Befestigungsabschnitten (30) ausgewählt ist/sind, wobei
der Roboter (4, 103) so konfiguriert ist, dass er die Arbeit unter Verwendung der an dem zweiten Flächenabschnitt (3, 3a, 3A, 3B) befestigten Arbeitseinheit durchführt und einen Sensor (41) enthält, der so konfiguriert ist, dass er eine vorbestimmte Position des zweiten Flächenabschnitts (3, 3a, 3A, 3B) erfasst, wobei diese Position mit der Vielzahl von Befestigungsabschnitten (30) verbunden ist, und dass er den vorbestimmten Vorgang unter Verwendung der erfassten vorbestimmten Position als Referenz durchführt,
der zweite Flächenabschnitt (3, 3a, 3A, 3B) aus einem perforierten Metall gebildet ist, in dem die Befestigungsabschnitte (30) Löcher enthalten, die regelmäßig in gleichen Abständen in der X-Achsenrichtung und der Y-Achsenrichtung angeordnet sind und als eine Skala verwendet werden, die konfiguriert ist, um die Anordnungsposition der Arbeitseinheit in Bezug auf die Anordnungsposition des Roboters (4) zu erhalten,
der zweite Flächenabschnitt (3) parallel zu dem ersten Flächenabschnitt (2) an einer Position gehalten wird, die in der Z-Achsenrichtung höher als das erste Flächenabschnitt (2) ist.

2. Roboterzelle (1, 1A) nach Anspruch 1, ferner umfassend eine Spannvorrichtung (6), die eine Markierung (62), die eine Referenzposition anzeigt, die eine Referenz des vorbestimmten Vorgangs sein soll, und einen Anordnungsabschnitt (61), auf dem die Arbeitseinheit an einer in Bezug auf die Markierung (62) vorbestimmten Position angeordnet ist und an dem zweiten Flächenabschnitt (3, 3a, 3A, 3B) unter Verwendung des Befestigungsabschnitts (30) befestigt ist, enthält, wobei der Sensor (41) konfiguriert ist, um eine Position der Markierung (62) zu erfassen.

3. Roboterzelle (1, 1A) nach Anspruch 1 oder 2, die ferner eine Robotersteuerung (40) umfasst, die so konfiguriert ist, dass sie Lerndaten zum Lehren des vorbestimmten Vorgangs für den Roboter (4, 103) von einem Simulator (80) empfängt, der so konfiguriert ist, dass er eine Simulation des vorbestimmten Vorgangs durchführt, der von dem Roboter (4, 103) ausgeführt wird, und dass er einen Vorgang des Roboters (4, 103) auf der Grundlage der empfangenen Lerndaten steuert.

4. Roboterzelle (1, 1A) nach einem der Ansprüche 1 bis 3, wobei der erste Flächenabschnitt (2, 2a, 2B) mit einem Befestigungsabschnitt (20) ausgebildet ist, der dazu verwendet wird, den Roboter (4, 103) an einer vorbestimmten Position zu befestigen, und der einstückig mit dem zweiten Flächenabschnitt (3, 3a, 3A, 3B) ausgebildet ist.

5. Roboterzelle (1, 1A) nach einem der Ansprüche 1 bis 4, wobei
der zweite Flächenabschnitt (3, 3a, 3A, 3B) umfasst:
einen ebenen Abschnitt, der im Wesentlichen parallel zu dem ersten Flächenabschnitt (2, 2a, 2B) verläuft, und
einen ebenen Abschnitt, der einstückig mit dem ebenen Abschnitt ausgebildet ist und nicht im Wesentlichen parallel zu dem ersten Flächenabschnitt (2, 2a, 2B) verläuft.

6. Roboterzelle (1, 1A) nach einem der Ansprüche 1 bis 5, ferner umfassend:
eine Bearbeitungskammer (102), die Folgendes umfasst:
ein Kammergehäuse (121), dessen Inneres einen Arbeitsraum des Roboters (103) bildet,
eine Tür (102A, 102B, 102C, 102D), die eine in einer Wandfläche des Kammergehäuses (121) vorgesehene Öffnung (102a, 102b, 102c, 102d) öffnet und schließt, und
eine Saugeinheit (122), die außerhalb des Kammergehäuses (121) vorgesehen ist und Luft in das Kammergehäuse (121) ansaugt; und
einen Arbeitstisch (104, 104a), der auf einer Seite der Wandfläche vorgesehen ist, in der die Öffnung (102a, 102b, 102c, 102d) vorgesehen ist, und in dem der zweite Flächenabschnitt (3, 3a, 3A, 3B), der eine Tischplatte (141, 142, 143, 147, 148) bildet, an einer Position angeordnet ist, die höher als eine Anordnungsfläche (124) des Roboters (103) ist.

7. Roboterzelle (1, 1A) nach Anspruch 6, wobei die Tischplatte (141, 142, 143, 147, 148) zwischen der Wandfläche, in der die Öffnung (102a, 102b, 102c, 102d) vorgesehen ist, und dem Roboter (103) angeordnet ist.

8. Roboterzelle (1, 1A) nach Anspruch 6 oder Anspruch 7, wobei die Öffnung (102a, 102b, 102c, 102d) in zwei oder mehr Wandflächen des Kammerkörpers (121) vorgesehen ist.

9. Roboterzelle (1, 1A) nach Anspruch 8, wobei
die Öffnung (102a, 102b, 102c, 102d) in jeder der drei benachbarten Wandflächen vorgesehen ist, und
die Tischplatte (102a, 102b, 102c, 102d) so ausgebildet ist, dass sie den Roboter (103) entlang der drei benachbarten Wandflächen umgibt.

10. Roboterzelle (1, 1A) nach Anspruch 6, wobei
die Tischplatte (141, 142, 143, 147, 148) so angeordnet ist, dass ein Oberflächenniveau auf einer Rückseite höher ist als eine Position eines unteren Seitenrandabschnitts der Öffnung (102a, 102b, 102c, 102d), und
die Saugeinheit (122) Luft in das Kammergehäuse (121) von einer Position ansaugt, die höher ist als ein Oberflächenniveau auf einer Vorderseite der Tischplatte (141, 142, 143, 147, 148).

11. Verfahren zum Zusammenbau einer Roboterzelle (1, 1A), umfassend:
Anordnen eines Roboters (4, 103), der eine Arbeit ausführt, indem er einen vorbestimmten Vorgang an einem ersten Flächenabschnitt (2, 2a, 2B) durchführt;
Befestigen einer Arbeitseinheit, die bei der Arbeit durch den Roboter (4, 103) verwendet wird, an einem zweiten Flächenabschnitt (3, 3a, 3A, 3B), in dem eine Vielzahl von Befestigungsabschnitten (30), die verwendet werden, um die Arbeitseinheit zu befestigen, an einer vorbestimmten Position angeordnet ist, indem ein Befestigungsabschnitt (30) verwendet wird, der aus den Befestigungsabschnitten (30) ausgewählt ist,
wobei der Roboter (4, 103), der die Arbeit unter Verwendung der an dem zweiten Flächenabschnitt (3, 3a, 3A, 3B) befestigten Arbeitseinheit durchführt, einen Sensor (41) aufweist, der eine vorbestimmte Position des zweiten Flächenabschnitts (3, 3a, 3A, 3B) erfasst, wobei die Position mit der Vielzahl von Befestigungsabschnitten (30) verknüpft ist, und den vorbestimmten Vorgang unter Verwendung der erfassten vorbestimmten Position als Referenz durchführt,
wobei der zweite Flächenabschnitt (3, 3a, 3A, 3B) aus einem perforierten Metall gebildet ist, in dem die Befestigungsabschnitte (30) Löcher enthalten, die regelmäßig in einem Gitter angeordnet sind und als eine Skala verwendet werden, um die Anordnungsposition der Arbeitseinheit in Bezug auf die Anordnungsposition des Roboters (4) zu erhalten,
wobei der zweite Flächenabschnitt (3) parallel zu dem ersten Flächenabschnitt (2) an einer Position gehalten wird, die in vertikaler Richtung höher als der erste Flächenabschnitt (2) ist.

## Revendications

1. Cellule de robot (1, 1A) comprenant :
une première partie de surface (2, 2a, 2B) sur laquelle est disposé un robot (4, 103) qui est configuré pour effectuer un travail en réalisant une opération prédéterminée ;
une seconde partie de surface (3, 3a, 3A, 3B) dans laquelle une pluralité de parties de fixation (30) qui sont utilisées pour fixer une unité d'usinage utilisée dans la pièce d'usinage par le robot (4, 103) sont prévues à des positions prédéterminées, et à laquelle l'unité d'usinage est fixée en utilisant une ou plusieurs parties de fixation (30) sélectionnées parmi les parties de fixation (30), dans laquelle
le robot (4, 103) est configuré pour effectuer la pièce d'usinage en utilisant l'unité d'usinage fixée à la seconde partie de surface (3, 3a, 3A, 3B) et comprend un capteur (41) configuré pour détecter une position prédéterminée de la seconde partie de surface (3, 3a, 3A, 3B), laquelle position est associée à la pluralité de parties de fixation (30), et pour effectuer l'opération prédéterminée en utilisant la position prédéterminée détectée comme référence,
la seconde partie de surface (3, 3a, 3A, 3B) est formée d'un métal perforé dans lequel les parties de fixation (30) comprennent des trous disposés régulièrement à intervalles égaux dans la direction de l'axe X et dans la direction de l'axe Y et forme une échelle configurée pour obtenir la position de disposition de l'unité d'usinage par rapport à la position de disposition du robot (4),
la seconde partie de surface (3) est supportée parallèlement à la première partie de surface (2) à une position plus élevée que la première partie de surface (2) dans la direction de l'axe Z.

2. Cellule de robot (1, 1A) selon la revendication 1, comprenant en outre un gabarit (6) qui comprend une marque (62) qui indique une position de référence pour être une référence de l'opération prédéterminée et une partie d'agencement (61) sur laquelle l'unité d'usinage est agencée à une position prédéterminée par rapport à la marque (62), et est fixée à la seconde partie de surface (3, 3a, 3A, 3B) en utilisant la partie de fixation (30), dans laquelle le capteur (41) est configuré pour détecter une position de la marque (62).

3. Cellule de robot (1, 1 A) selon la revendication 1 ou la revendication 2, comprenant en outre un dispositif de commande de robot (40) configuré pour recevoir des données d'enseignement pour enseigner l'opération prédéterminée au robot (4, 103) à partir d'un simulateur (80) qui est configuré pour effectuer une simulation de l'opération prédéterminée effectuée par le robot (4, 103), et pour commander une opération du robot (4, 103) sur la base des données d'enseignement reçues.

4. Cellule de robot (1, 1A) selon l'une quelconque des revendications 1 à 3, dans laquelle la première partie de surface (2, 2a, 2B) est pourvue d'une partie de fixation (20) qui est utilisée pour fixer le robot (4, 103) à une position prédéterminée, et est formée d'un seul tenant avec la seconde partie de surface (3, 3a, 3A, 3B).

5. Cellule de robot (1, 1A) selon l'une quelconque des revendications 1 à 4, dans laquelle
la seconde partie de surface (3, 3a, 3A, 3B) comprend
une partie plane sensiblement parallèle à la première partie de surface (2, 2a, 2B), et une partie plane qui est formée intégralement avec la partie plane et n'est pas sensiblement parallèle à la première partie de surface (2, 2a, 2B).

6. Cellule de robot (1, 1A) selon l'une quelconque des revendications 1 à 5, comprenant en outre :
une chambre de tirage (102) qui comprend
un corps de chambre (121), dont l'intérieur devient un espace d'usinage du robot (103),
une porte (102A, 102B, 102C, 102D) capable d'ouvrir et de fermer une ouverture (102a, 102b, 102c, 102d) prévue dans une surface de paroi du corps de chambre (121), et
une unité d'aspiration (122) qui est prévue à l'extérieur du corps de chambre (121) et aspire l'air dans le corps de chambre (121) ; et
une table d'usinage (104, 104a) qui est prévue sur un côté de la surface de paroi dans laquelle l'ouverture (102a, 102b, 102c, 102d) est prévue, et dans laquelle la seconde partie de surface (3, 3a, 3A, 3B) destinée à être un plateau de table (141, 142, 143, 147, 148) est disposée à une position plus élevée qu'une surface d'agencement (124) du robot (103).

7. Cellule de robot (1, 1A) selon la revendication 6,
dans lequel le plateau de table (141, 142, 143, 147, 148)
est disposé entre la surface de la paroi dans laquelle l'ouverture (102a, 102b, 102c, 102d) est prévue et le robot (103).

8. Cellule de robot (1, 1A) selon la revendication 6 ou la revendication 7, dans laquelle l'ouverture (102a, 102b, 102c, 102d) est prévue dans deux ou plusieurs surfaces de paroi du corps de chambre (121).

9. Cellule de robot (1, 1A) selon la revendication 8, dans laquelle
l'ouverture (102a, 102b, 102c, 102d) est prévue dans chacune des trois surfaces de paroi adjacentes, et
le plateau de table (102a, 102b, 102c, 102d) est formé pour entourer le robot (103) le long des trois surfaces de paroi adjacentes.

10. Cellule de robot (1, 1A) selon la revendication 6, dans laquelle le plateau de table (141, 142, 143, 147, 148) est agencé de telle sorte qu'un niveau d'une surface sur un côté arrière est plus élevé qu'une position d'une partie de bord latéral inférieur de l'ouverture (102a, 102b, 102c, 102d), et l'unité d'aspiration (122) aspire l'air dans le corps de chambre (121) depuis une position plus élevée qu'un niveau d'une surface sur un côté avant du plateau (141, 142, 143, 147, 148).

11. Procédé d'assemblage d'une cellule de robot (1, 1 A) comprenant les opérations suivantes:
agencer un robot (4, 103) qui effectue un travail en réalisant une opération prédéterminée sur une première partie de surface (2, 2a, 2B) ;
fixer une unité d'usinage utilisée dans la pièce d'usinage par le robot (4, 103) à une seconde partie de surface (3, 3a, 3A, 3B) dans laquelle une pluralité de parties de fixation (30) qui sont utilisées pour fixer l'unité d'usinage est disposée à une position prédéterminée en utilisant une partie de fixation (30) sélectionnée parmi les parties de fixation (30),
le robot (4, 103) qui effectue la pièce d'usinage en utilisant l'unité d'usinage fixée à la seconde partie de surface (3, 3a, 3A, 3B) comprend un capteur (41) détectant une position prédéterminée de la seconde partie de surface (3, 3a, 3A, 3B), laquelle position est associée à la pluralité de parties de fixation (30),
et effectuer l'opération prédéterminée en utilisant la position prédéterminée détectée comme référence,
dans lequel la seconde partie de surface (3, 3a, 3A, 3B) est formée d'un métal perforé dans lequel les parties de fixation (30) comprennent des trous disposés régulièrement dans une grille et utilisés comme une échelle pour obtenir la position de disposition de l'unité d'usinage par rapport à la position de disposition du robot (4),
la seconde partie de surface (3) est supportée parallèlement à la première partie de surface (2) à une position plus élevée que la première partie de surface (2) dans la direction verticale Z.
